# EUROPÄISCHE PATENTSCHRIFT

(11) **EP 1 391 353 B1**
(45) Veröffentlichungstag und Bekanntmachung des Hinweises auf die Patenterteilung: **21.05.2008**
(21) Anmeldenummer: 03090228.2
(22) Anmeldetag: 23.07.2003
(51) Int. Cl.: B60R 21/16

(54) **Insassenschutzeinrichtung**
Occupant protection device
Dispositif pour la protection des occupants

(30) Priorität: 14.08.2002 DE 10237574
(43) Veröffentlichungstag der Anmeldung: 25.02.2004
(73) Patentinhaber: TAKATA CORPORATION, Minato-ku, Tokyo 106-8510 (JP)
(72) Erfinder: Bossecker, Maximilian, 76532 Baden-Baden (DE); Karlbauer, Ulrich, 89077 Ulm (DE); Getz, Robert, 89077 Ulm (DE)
(74) Vertreter: Gross, Felix

(56) Entgegenhaltungen:
- EP-A- 1 164 062
- DE-A- 19 509 014
- PATENT ABSTRACTS OF JAPAN Bd. 1998, Nr. 08, 30. Juni 1998 (1998-06-30) -& JP 10 071915 A (TACHI S CO LTD), 17. März 1998 (1998-03-17)

## Beschreibung

Die Erfindung bezieht sich auf eine Insassenschutzeinrichtung mit den Merkmalen gemäß dem Oberbegriff des Anspruchs 1.

Eine derartige Insassenschutzeinrichtung ist aus der deutschen Offenlegungsschrift DE 195 09 014 bekannt. Bei dieser Insassenschutzeinrichtung ist in einer Kopfstütze eines Fahrzeugsitzes ein Gassack integriert. Im Falle eines Fahrzeugunfalls wird der Gassack mit einem Gasgenerator aufgeblasen, wobei durch im Inneren des Gassacks vorhandene Fangbänder eine derartige Formgebung des Gassacks erfolgt, dass funktional unterschiedliche Stützelemente mit unterschiedlichen Schutzfunktionen gebildet werden.

Aus dem japanischen Abstract mit der Veröffentlichungsnummer 10 071915 ist eine Sicherheitsschutzeinrichtung bekannt, bei der ein Gassack aus einer Rückenlehne eines Fahrzeugsitzes heraus entfaltet wird und sich dabei zwischen dem Kopf des Fahrzeuginsassen und einer Kopfstütze des Fahrzeugsitzes entfaltet. Der Airbag weist Airbagabschnitte auf, die untereinander in Strömungsverbindung stehen.

Aus der europäischen Offenlegungsschrift 1 164 062 A1 ist eine Insassenschutzeinrichtung mit einem Gassack mit zwei Abschnitten bekannt. Ein Abschnitt des Gassacks wirkt dabei als Stützabschnitt und der andere Abschnitt des Gassacks wirkt als Halteabschnitt. Die Funktion des Stützabschnitts besteht darin, die Kopfstütze des Fahrzeugsitzes in eine angehobene Stellung zu bringen. Der Halteabschnitt des Gassacks dient dazu, den Kopf bzw. den Hals des Insassen nach vorn zu beugen.

Der Erfindung liegt die Aufgabe zugrunde, bei einer Insassenschutzeinrichtung der eingangs angegebenen Art dafür zu sorgen, dass ein besonders "sanftes" Vorbeugen des Kopfes bzw. des Halses des Insassen durch den Gassack erreicht wird. Konkret soll eine Verletzung der empfindlichen Nackenwirbel des Insassen bei dem durch den Gassack erzwungenen Vorbeugen zuverlässig ausgeschlossen werden.

Diese Aufgabe wird ausgehend von einer Insassenschutzeinrichtung der eingangs angegebenen Art erfindungsgemäß durch die kennzeichnenden Merkmale des Anspruchs 1 gelöst. Vorteilhafte Ausgestaltungen der Erfindung sind in den Unteransprüchen beschrieben.

Danach ist vorgesehen, dass der Gassack neben dem aktiven - also den Hals- bzw. Nacken beugenden - Hauptsack noch einen - im Hinblick auf die "Beugefunktion" passiven - Hilfssack aufweist. Die Funktion dieses Hilfssacks besteht darin, den Hauptsack im zunächst noch gasleeren Zustand in den Hals-Nacken-Bereich, also in den Bereich zwischen der Kopfstütze bzw. dem oberen Bereich des Fahrzeugsitzes und dem Kopf- bzw. dem Nacken des Fahrgastes, zu ziehen und dort zu positionieren, bevor es zum Aufblasen des Hauptsackes kommt. Dadurch, dass der Hauptsack zunächst in den Hals-Nacken-Bereich des Insassen gebracht und dort vor dem Aufblasen vollständig "entfaltet" und positioniert wird, ist sichergestellt, dass bei einem nachfolgenden Aufblasen des Hauptsacks der Druckaufbau im Hals-Nacken-Bereich des Insassen sehr gleichmäßig und sanft verläuft, weil nämlich der Druck gleichmäßig über die gesamte Außenfläche des Hauptsacks auf den Insassen ausgeübt wird. Der erfindungsgemäße Gedanke besteht also zusammengefasst darin, dass der den Hals-Nacken-Bereich beugende Hauptsack vor dem Aufblasen zunächst entfaltet und positioniert wird, um einen sanften Druckaufbau und ein sanftes Vorbeugen zu bewirken; erreicht wird dies durch den zusätzlichen erfindungsgemäßen Hilfssack, der keine "beugende" Funktion hat, sondern den - im wesentlichen - zunächst noch gasleeren Hauptsack lediglich entfaltet und positioniert.

Als vorteilhaft wird es angesehen, wenn der Hilfssack zwei schlauchförmige Positionierkissen aufweist, die beim Aufblasen den Hauptsack positionieren. Vorzugsweise können sich die Positionierkissen beim Aufblasen des Hilfssacks links bzw. rechts am Kopf des Insassen vorbei in Richtung Fahrzeugdach entfalten. Durch die Anordnung der Positionierkissen neben dem Kopf des Insassen ist nämlich sichergestellt, dass es beim Aufblasen des Hilfssacks bzw. der Positionierkissen noch zu keinem ungewollten Druckaufbau im Hals-Nacken-Bereich des Insassen kommen kann; denn der Druckaufbau soll - wie oben ausgeführt - sanft erst durch den Hauptsack erfolgen.

Um dabei zu erreichen, dass die beiden Positionierkissen eine definierte Lage zueinander haben, wird es als vorteilhaft angesehen, wenn die zwei schlauchförmigen Positionierkissen durch ein Mittelkissen verbunden sind, das sich beim Aufblasen im Bereich zwischen der Kopfstütze und dem Kopf des Insassen entfaltet. Um dabei sicherzustellen, dass beim Aufblasen des Hilfssacks noch kein Druck auf den Hals-Nacken-Bereich des Insassen ausgeübt wird, sollte vorteilhaft die Dicke des Mittelkissens derart klein bemessen sein, dass beim Befüllen des Hilfssacks mit Gas der Kopf des Insassen nur unwesentlich nach vorne in Fahrtrichtung bewegt wird. Unter einer unwesentlichen Bewegung nach vorn ist dabei eine Bewegung des Kopfes von ca. maximal 15 cm in Fahrtrichtung zu verstehen.

Um zu verhindern, dass die Positionierkissen beim Aufblasen derart an das Dach des Fahrzeugs anstoßen, dass sie ihre Sollposition bzw. Solllage nicht erreichen können, wird es als vorteilhaft angesehen, wenn die Positionierkissen im Dachbereich nach vom abgewinkelt bzw. nach vorn geneigt sind; dies wird in vorteilhafter Weise dadurch erreicht, dass die Positionierkissen jeweils zwei Bereiche aufweisen, nämlich einen unteren Bereich, der zumindest im aufgeblasenen Zustand in Höhe des Hals- und Kopfbereiches des Insassen angeordnet ist und sich vom Fahrersitz in Richtung Fahrzeugdach erstreckt, und einen oberen Bereich, der zumindest im aufgeblasenen Zustand oberhalb des Kopfbereiches des Insassen angeordnet ist und gegenüber dem unteren Bereich in Fahrtrichtung nach vorn abgewinkelt ist.

Wenn die beiden äußeren Positionierkissen in ihrem unteren Bereich durch das Mittelkissen und in ihrem oberen Bereich durch den oberen Bereich des Hauptsacks verbunden sind, wird in vorteilhafter Weise sowohl eine definierte Lage der Positionierkissen zueinander als auch ein besonders zuverlässiges Entfalten und Positionieren des Hauptsacks im Hals-Nacken-Bereich des Insassen gewährleistet.

Im Übrigen wird es als vorteilhaft angesehen, wenn die Länge des oberen Bereichs der Positionierkissen derart dimensioniert ist, dass eine Abdeckung des Dachholmes des Fahrzeugs erfolgt; denn bei einer derartigen Dimensionierung der Länge der Positionierkissen wird eine Doppelfunktion der Positionierkissen erreicht: Zum einen dienen die Positionierkissen zum Positionieren des Hauptsacks und zum anderen dienen sie dazu, eine seitliche Schutzfunktion des Fahrgastes gegenüber dem Dachholm des Fahrzeugs zu erreichen.

Ein besonders zuverlässiger Schutz der Hals-Nacken-Wirbel des Insassen wird insbesondere dann erreicht, wenn ein ungeschütztes Aufschlagen des Kopfes des Insassen gegen das Fahrzeugdach - beispielsweise wenn sich das Fahrzeug überschlägt - verhindert wird. Dies lässt sich in vorteilhafter Weise dadurch erreichen, dass der obere Bereich des Hauptsacks derart als Rutsche ausgebildet ist, dass der Kopf des Insassen während einer Bewegung in Richtung zum Fahrzeugdach entlang einer vorgegebenen Bahn geführt wird.

Zur Gewährleistung einer symmetrischen Befüllung des Hauptsacks wird es als vorteilhaft angesehen, wenn zwei Verbindungslöcher zwischen Haupt- und Hilfssack vorgesehen werden. Um dabei die gewünschte Positionierung des Hauptsacks durch die beiden Positionierkissen zu gewährleisten, wird es als vorteilhaft angesehen, wenn ein Verbindungsloch zur Verbindung des Hauptsackes mit einem der beiden Positionierkissen und ein weiteres Verbindungsloch zum Verbinden des Hauptsacks mit dem anderen der beiden Positionierkissen vorgesehen ist.

Um zu erreichen, dass die beiden Positionierkissen auch einen seitlichen Halt des Kopfes des Insassen gewährleisten, wird es als vorteilhaft angesehen, wenn die beiden Positionierkissen - gegenüber dem Mittelkissen - in Fahrtrichtung erhaben sind.

Besonders einfach und kostengünstig lässt sich der Hilfssack fertigen, wenn er durch zwei jeweils entlang einer Spiegelachse - im wesentlichen - spiegelsymmetrisch geformte Gassack-Lagen gebildet ist, die an ihrem äußeren Rand miteinander verbunden sind sowie durch mindestens zwei streifenförmige, die beiden Gassack-Lagen verbindende Verbindungsbereiche in drei Teilbereiche untergliedert sind, von denen der mittlere Teilbereich das Mittelkissen und die beiden äußeren Teilbereiche die Positionierkissen bilden und das Mittelkissen und die beiden unteren Bereiche der Positionierkissen im wesentlichen parallel zur Spiegelachse angeordnet sind, wohingegen die beiden oberen Bereiche der Positionierkissen unter einem vorgegebenen Winkel senkrecht zur Spiegelachse abgewinkelt sind.

Um zu erreichen, dass eine optimale Neigung zwischen dem unteren und dem oberen Bereich der beiden Positionierkissen erreicht wird, wird es als vorteilhaft angesehen, wenn der vorgegebene Winkel ungefähr 45° beträgt.

Die zwei streifenförmigen, die beiden Gassack-Lagen verbindenden Verbindungsbereiche können durch eine Klebeverbindung und/oder durch eine Naht, also einen Saum gebildet sein. Entsprechendes gilt für die beiden Gassack-Lagen, die an ihrem äußeren Rand miteinander vernäht und/oder verklebt sein können.

Um die Stabilität des Mittelkissens zu erhöhen, wird es als vorteilhaft angesehen, wenn im Bereich des Mittelkissens schlauchförmige Mittelschläuche vorgesehen werden; dies lässt sich in vorteilhafter Weise dadurch erreichen, dass die beiden Gassack-Lagen im Bereich der Spiegelachse zumindest teilweise miteinander verbunden, insbesondere verklebt und/oder vernäht, sind unter Bildung zweier schlauchförmiger Mittelschläuche im Mittelkissen.

Um das Entfalten des Hauptsackes und die richtige Positionierung des Hauptsackes zu erleichtern, wird es als vorteilhaft angesehen, wenn die Mittelschläuche im Mittelkissen in Richtung Fahrzeugdach konisch zulaufen, um in diesem Bereich den Übergang zwischen dem Mittelkissen und der Rutsche des Hauptsacks zu glätten.

Das konische Zusammenlaufen der Mittelschläuche lässt sich in vorteilhafter Weise dadurch erreichen, dass der Rand der beiden Gassack-Lagen im oberen Bereich der Mittelkissen zumindest teilweise wellenförmig ausgestaltet ist.

Ein besonders einfacher und damit vorteilhafter Aufbau des Hauptsackes wird dadurch erreicht, dass der Hauptsack durch zwei weitere Gassack-Lagen gebildet ist, die an ihrem äußeren Rand miteinander verbunden sind, der Hauptsack in einen unteren Kissenbereich und einen oberen Kissenbereich untergliedert ist, wobei der obere Kissenbereich durch zwei weitere streifenförmige, die beiden weiteren Gassack-Lagen verbindende Verbindungsbereiche in drei schlauchförmige Teilbereiche untergliedert ist, die die Rutsche des Hauptsackes bilden.

Die zwei weiteren streifenförmigen Verbindungsbereiche können vorzugsweise durch Verkleben und/oder durch Vernähen gebildet sein; entsprechendes gilt für die beiden weiteren Gassack-Lagen, die an ihrem äußeren Rand vorzugsweise miteinander verklebt und/oder miteinander vernäht sein sollen.

Im übrigen wird es als vorteilhaft angesehen, wenn die beiden unter dem vorgegebenen Winkel abstehenden innenliegenden Ränder des oberen Bereichs der Positionierkissen und der seitliche obere Rand des Hauptkissens miteinander, insbesondere durch Verkleben und/oder Vernähen, verbunden sind; denn bei dieser Ausgestaltung der Verbindung zwischen Positionierkissen und Hauptkissen wird in besonders einfacher Weise die oben erläuterte Neigung der Positionierkissen oberhalb des Kopfes des Insassen, also im Dachbereich, gewährleistet.

Um eine ausreichende Stabilität des Hauptsackes zu erreichen, wird es als vorteilhaft angesehen, wenn die zwei weiteren streifenförmigen Verbindungsbereiche im oberen Kissenbereich des Hauptsacks jeweils in einen kreisförmigen oder ovalen Saum münden; um dabei zu gewährleisten, dass es zu keiner Fixierung des Fahrgastkopfes in einer Unfallsituation kommt, wird es als vorteilhaft angesehen, wenn die kreisförmigen bzw. ovalen Säume von dem Mittelkissen des Hilfssackes derart abgedeckt werden, dass eine Fixierung des Kopfes ausgeschlossen ist. Dies wird in vorteilhafter Weise dadurch erreicht, dass der Hauptsack und der Hilfssack derart zueinander angeordnet sind, dass im zumindest annähernd aufgeblasenen Zustand von Haupt- und Hilfssack die schlauchförmigen Mittelkissen des Hilfssacks zwischen dem Kopf des Insassen und den beiden Säumen angeordnet sind und diese gegenüber dem Kopf abdecken.

Besonders einfach und damit vorteilhaft lässt sich die Form des unteren Kissenbereichs des Hauptkissens durch eine in sich geschlossene Abnaht, beispielsweise einen ovalen Saum, einstellen; die Formgebung des Hauptsackes spielt insbesondere deshalb eine große Rolle, weil die Form festlegt, wie stark der Kopf und der Hals des Insassen gebeugt werden sollen; es wird daher als vorteilhaft angesehen, wenn der untere Kissenbereich des Hauptsacks eine in sich geschlossene Abnaht, insbesondere einen ovalen Saum, aufweist, der die Dicke und die Form des Hauptsacks im Hinblick auf das gewünschte Beugen von Hals und Kopf des Insassen festlegt.

Um zu vermeiden, dass sich der Gassack beim Aufblasen im Bereich der Kopfstütze des Fahrgastsitzes verfängt, wird es als vorteilhaft angesehen, wenn der Sackbehälter, der den Gassack in deaktiviertem Zustand aufbewahrt, derart angeordnet oder derart mit einer Rampe, beispielsweise einem Blechansatz, versehen ist, dass sich der Gassack beim Aufblasen in Fahrtrichtung nach vorn geneigt entfaltet.

Um eine ausreichende Stabilität des Gassackes auch im Falle eines Fahrzeugüberschlags zu erreichen, wird es als vorteilhaft angesehen, wenn das Mittelkissen des Hilfssacks in seinem unteren, sich im wesentlichen im Bereich zwischen der Kopfstütze und dem oberen Ende des Fahrersitzes entfaltenden Bereich gegenüber dem übrigen Bereich des Mittelkissens verstärkt ausgeführt ist. Eine verstärkte Ausführung des Mittelkissens kann insbesondere dadurch erreicht werden, dass das Mittelkissen im Bereich zwischen der Kopfstütze und dem Fahrersitz gegenüber dem übrigen Bereich des Mittelkissens dicker ausgeführt ist.

Insbesondere bei einem Fahrzeugüberschlag kommt es darauf an, dass sich die seitliche Lage des Gassackes nicht verändert; eine besonders sichere seitliche Befestigung des Gassacks wird in vorteilhafter Weise dadurch erreicht, dass die Befestigung des Hilfssacks am Sackbehälter oder an dem Sitz des Insassen an mindestens zwei Befestigungspunkten erfolgt, von denen der eine am unteren äußeren Rand eines der Positionierkissen und der andere am unteren äußeren Rand des anderen Positionierkissens angeordnet ist.

Die Strömungsverbindung zwischen dem Haupt- und dem Hilfssack lässt sich besonders einfach und damit vorteilhaft dadurch gewährleisten, dass der Hauptsack und der Hilfssack im Bereich ihrer Verbindungslöcher miteinander verklebt sind, insbesondere mit Silikonkleber. Das Verkleben von Haupt- und Hilfssack wird dabei so durchgeführt, dass eine hohe Formstabilität des resultierenden "Gesamtgassacks" erreicht wird.

Im Übrigen wir es als vorteilhaft angesehen, wenn die Nähte bzw. Säume des Gassacks mit Klebstoff, insbesondere Silikonkleber, abgedichtet sind, vorzugsweise sollten alle Nähte durch Silikonkleber abgedichtet sein.

Bei einem Auffahrunfall mit hoher Geschwindigkeit kann es vorkommen, dass die Rücklehne des Insassensitzes, beispielsweise des Fahrersitzes, mechanisch versagt und sich nach hinten verschiebt. Ebenso bewegt sich dann der Fahrzeuginsasse nach hinten und ist der Gefahr ausgesetzt, Kopfverletzungen an harten Fahrzeugteilen zu erleiden; um dann einen ausreichenden Schutz des Kopfes des Fahrzeuginsassen zu gewährleisten, kann der Gassack, insbesondere die Rutsche des Hauptsackes, genutzt werden. Es wird daher als vorteilhaft angesehen, wenn die erfindungsgemäße Insassenschutzeinrichtung einen im hinteren Bereich des Fahrzeugs angeordneten Aufprallsensor und eine mit diesem Sensor verbundene Steuereinrichtung aufweist, die das Aufblasen des Gassacks auch bei einem Heckaufprall auslöst, sofern der Aufprallsensor einen Aufprall eines von hinten auffahrenden Fahrzeugs mit einer Differenzgeschwindigkeit ermittelt, die einen vorgegebenen Differenzgeschwindigkeitsgrenzwert überschreitet. Unter dem Begriff Differenzgeschwindigkeit wird dabei der Geschwindigkeitsunterschied zwischen dem durch die Insassenschutzeinrichtung zu schützenden Fahrzeug und dem von hinten auffahrenden Fahrzeug verstanden.
Zur Erläuterung der Erfindung zeigen:
- Figuren 1a, 1b, 1c: dreidimensionale Ansichten eines Ausführungsbeispiels für einen Gassack der erfindungsgemäßen Insassenschutzeinrichtung,
- Figur 2: den Hauptsack des Gassacks gemäß den Figuren 1a bis 1c in einer zweidimensionalen Darstellung,
- Figur 3: den Hilfssack des Gassacks gemäß den Figuren 1a bis1c in einer zweidimensionalen Darstellung,
- Figur 4a und 4b: jeweils eine zweidimensionale Darstellung, die die Verbindung von Haupt- und Hilfssack bei dem Gassack gemäß den Figuren 1a bis 1c zeigt, und
- Figuren 5a bis 5h: dreidimensionale Darstellungen, die das Aufblasen des Haupt- und Hilfssacks gemäß den Figuren 1a bis 1c in seinem zeitlichen Verlauf zeigen.

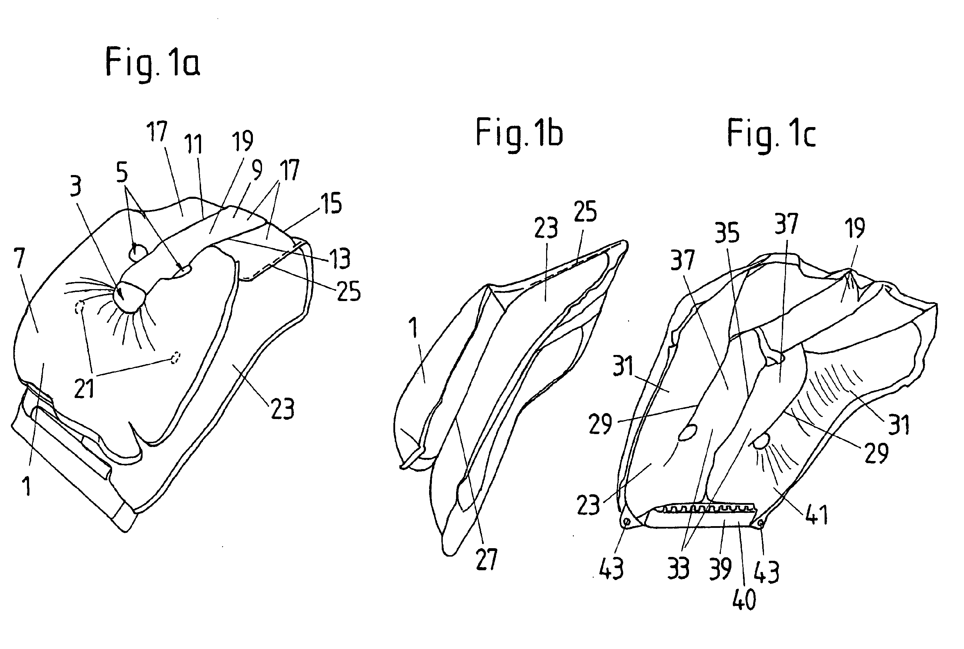

Die Figuren 1a bis 1c zeigen drei dreidimensionale Ansichten eines Ausführungsbeispiels für einen Gassack in der erfindungsgemäßen Insassenschutzeinrichtung. Man erkennt in der Figur 1a einen Hauptsack 1, der durch einen ovalen Saum 3 sowie durch zwei kreisrunde Säume 5 in einen unteren Bereich 7 und in einen oberen Bereich 9 untergliedert ist. Die beiden kreisrunden Säume 5 bilden die Enden zweier etwa paralleler Nähte 11 und 13, die sich jeweils bis zum Ende des oberen Bereichs 9 des Hauptsacks 1 erstrecken und dort in die äußere Hauptnaht 15 des Hauptsacks 1 münden.

Durch die beiden parallelen Nähte 11 und 13 werden im oberen Bereich 9 des Hauptsacks 1 drei schlauchförmige Teilbereiche 17 gebildet, die als Rutsche 19 wirken. Der untere Bereich 7 des Hauptsacks 1 dient dazu, den Kopf und den Hals eines Fahrzeuginsassen in Fahrtrichtung nach vorn zu beugen.

Im übrigen sind in der Figur 1a zwei Verbindungslöcher 21 angedeutet, über die der Hauptsack 1 mit einem Hilfssack 23 in einer Strömungsverbindung steht. Im Bereich der Verbindungslöcher 21 sind der Hauptsack 1 und der Hilfssack 23 miteinander verklebt.

Das Bezugszeichen 25 zeigt eine Verbindungsnaht, die den Hauptsack 1 und den Hilfssack 23 miteinander verbindet.

Die Figur 1b zeigt den Gassack in einer Seitenansicht. Man erkennt den Hauptsack 1, der im Bereich 27 der Verbindungslöcher auf dem Hilfssack 23 aufgeklebt ist und durch die seitliche Verbindungsnaht 25 mit diesem vernäht ist.

Die Figur 1c zeigt den Hilfssack 23, der durch zwei parallele Nähte 29 unterteilt ist, und zwar in zwei Positionierkissen 31 und in ein Mittelkissen 33.

Das Mittelkissen 33 ist wiederum durch eine Längsnaht 35, die anschaulich betrachtet eine Art Symmetrie- oder Spiegelachse für den Hilfssack 23 bildet, in zwei schlauchförmige Mittelschläuche 37 unterteilt, die nach oben hin - also in Richtung zu der Rutsche 19 des Hauptkissens 1 - konisch zusammenlaufen.

Im Übrigen zeigt die Figur 1c ein Gehäuse (bzw. Sackbehälter) 39, in dem der aus dem Hauptsack 1 und dem Hilfssack 23 gebildete Gassack 41 in gefaltetem Zustand verstaut werden kann. In dem Gehäuse 39 kann beispielsweise auch ein Gasgenerator 40 zum Aufblasen des Gassacks 41 aufbewahrt sein.

Zur Befestigung des Gassacks im Bereich eines Fahrzeugsitzes sind jeweils am unteren Rand der Positionierkissen 31 Befestigungspunkte 43 vorgesehen, die einen möglichst großen Abstand zueinander aufweisen.

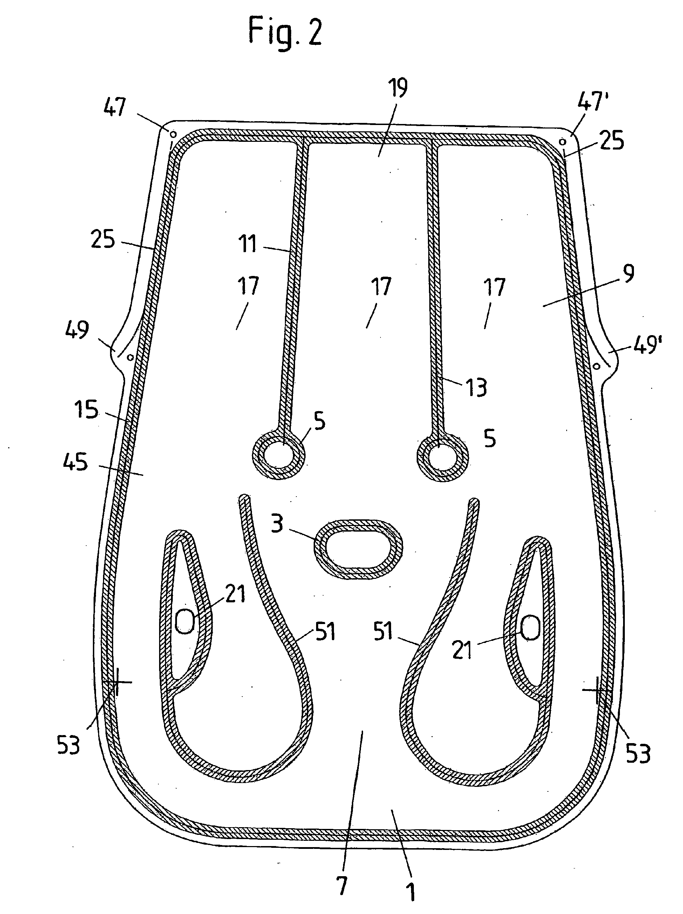

Die Figur 2 zeigt den Aufbau des Hauptsacks 1 des Gassacks 41 gemäß den Figuren 1a bis 1c. Man erkennt zwei Gassack-Lagen 45, die als Gewebeplatten 45 ausgebildet sind; diese Gewebeplatten 45 liegen aufeinander und sind durch die äußere Hauptnaht 15 miteinander vernäht.

Im übrigen erkennt man in der Figur 2 den ovalen Saum 3 sowie die beiden kreisrunden Säume 5, die den Hauptsack 1 in den unteren Kissenbereich 7 und in den oberen Kissenbereich 9 unterteilen. Außerdem sind die beiden parallelen Nähte 11 und 13 gezeigt, die den oberen Kissenbereich 9 in schlauchförmige Teilbereiche 17 untergliedern. Die schlauchförmigen Teilbereiche 17 bilden die Rutsche 19 des Hauptsackes 1.
Zusätzlich sind in der Figur 2 Justagepunkte 47, 47', 49 und 49' dargestellt. In dem Randbereich zwischen den Justagepunkten 47 und 49 sowie in dem Randbereich zwischen den Justagepunkten 47' und 49' ist der Hauptsack 1 mit den äußeren Rändern der Positionierkissen des Hilfssackes 23 vernäht.

Die Figur 2 zeigt darüber hinaus Klebestellen 51, die zum Verkleben des Hauptsackes 1 mit dem Hilfssack 23 im Bereich der Verbindungslöcher 21 verwendet werden.

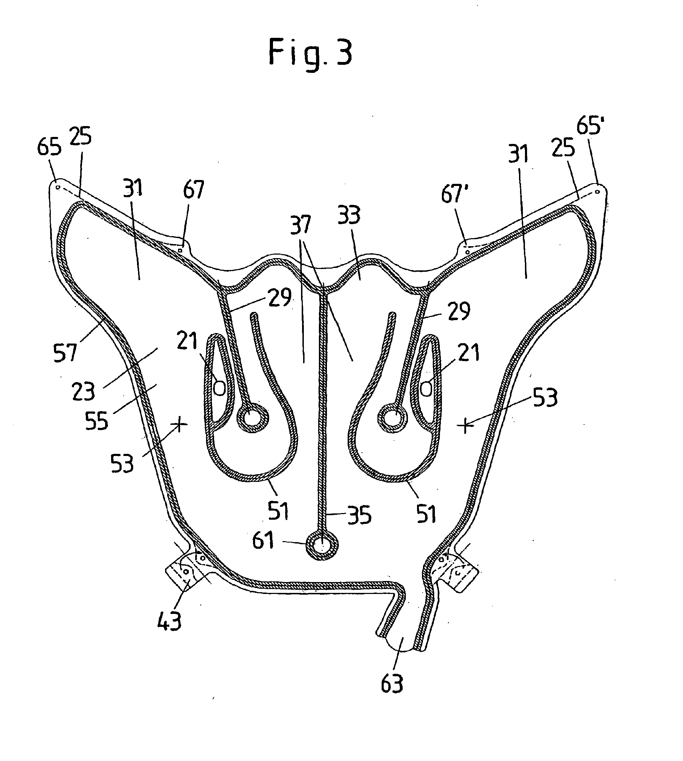

In der Figur 2 sind darüber hinaus Positionierkreuze 53 dargestellt, die angeben, wie der Hauptsack 1 relativ zum Hilfssack 23 positioniert wird; in der Figur 3, die nachfolgend erläutert wird, sind die entsprechenden Positionierkreuze bei dem Hilfssack 23 gezeigt.

Die Figur 3 zeigt den Aufbau des Hilfssackes 23 im Detail. Man erkennt zwei Gassack-Lagen 55, die als Gewebeplatten 55 ausgebildet sind. Diese Gewebeplatten 55 liegen aufeinander und sind durch eine äußere Naht 57 miteinander vernäht. Im übrigen erkennt man die parallelen Nähte 29, die den Hilfssack in die drei Teilbereiche untergliedern, nämlich in das Mittelkissen 33 und in die beiden Positionierkissen 31. Die beiden parallelen Nähte 29 münden jeweils in einen kreisrunden Saum, der in der Figur 3 das Bezugszeichen 59 trägt.

Die Figur 3 zeigt außerdem die Längsnaht 35, die als Spiegel- bzw. Symmetrieachse des Hilfssacks 23 bildet und in einen weiteren kreisrunden Saum 61 mündet. Durch diese Längsnaht 35 ist das Mittelkissen 33 in die zwei Mittelschläuche 37 unterteilt.

Im oberen Bereich des Hilfssacks 23 - dies ist dieser Bereich, der dem Gaseinfüllbereich 63 gegenüber liegt - sind die Gewebeplatten 55 wellenförmig ausgestaltet; dies führt dazu, dass beim Aufblasen des Hilfssacks 23 die beiden Mittelschläuche 37 des Hilfssacks 23 konisch zusammenlaufen.

Wie sich in der Figur 3 darüber hinaus erkennen lässt, sind das Mittelkissen 33 und die beiden unteren Bereiche der beiden Positionierkissen 31 im wesentlichen parallel zu der durch die Längsnaht 35 gebildete Spiegelachse angeordnet; die beiden oberen Bereiche der Positionierkissen 31, die also mit dem wellenförmigen Bereich des Mittelkissens 33 in Verbindung stehen, sind hingegen unter einem Winkel senkrecht zur Spiegelachse abgewinkelt. Dieser Winkel beträgt bei dem Ausführungsbeispiel gemäß der Figur 3 ca. 45°.

In der Figur 3 sind Justagepunkte 65, 67, 65' und 67' eingezeichnet, die jeweils Randbereiche der Gewebeplatte 45 des Hilfssacks 23 begrenzen. In den Nahtbereichen zwischen den Justagepunkten 65 und 67 bzw. 65' und 67' ist der Hilfssack 23 mit dem Hauptsack 1 durch die Naht 25 (vgl. Figuren 1a, 1b, 2, 3, 4a und 4 b) vernäht. Konkret werden die zwei Säcke derart miteinander vernäht, dass der Justagepunkt 47 gemäß der Figur 2 mit dem Justagepunkt 65 gemäß der Figur 3, der Justagepunkt 49 gemäß der Figur 2 mit dem Justagepunkt 67 gemäß der Figur 3, der Justagepunkt 65' gemäß der Figur 3 mit dem Justagepunkt 47' gemäß der Figur 2 und der Justagepunkt 67' gemäß der Figur 3 mit dem Justagepunkt 49' gemäß der Figur 2 zusammenfallen. Ein Vernähen der beiden Säcke an diesen Stellen ist dabei nur dadurch möglich, dass die Gewebeplatten 45 des Hilfssacks 23 im oberen Bereich der beiden Positionierkissen 31 quasi hochgeklappt werden, um eine Verbindung zu der Nahtstelle 25 zwischen dem Hauptsack 1 und dem Hilfssack 23 gemäß der Figur 2 zu ermöglichen.

Im übrigen zeigt die Figur 3 die Befestigungspunkte 43, mit denen der Gassack 1 in der Insassenschutzeinrichtung befestigt wird.

Ergänzend sind in der Figur 3 die Klebestellen 51 markiert, die zum Verkleben des Hilfssacks 23 mit dem Hauptsack 1 dienen. Darüber hinaus erkennt man die Positionierkreuze 53, die darstellen sollen, in welcher Lage die Gewebeplatten 45 des Hauptsackes 1 gemäß der Figur 2 mit den Gewebeplatten 55 des Hilfssacks 23 gemäß der Figur 3 verbunden werden sollen.

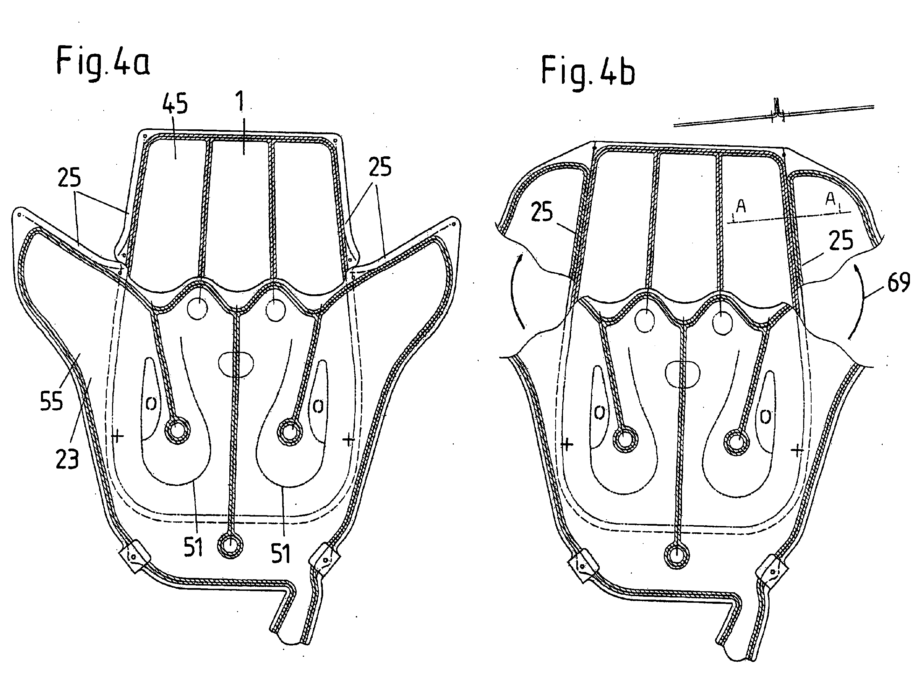

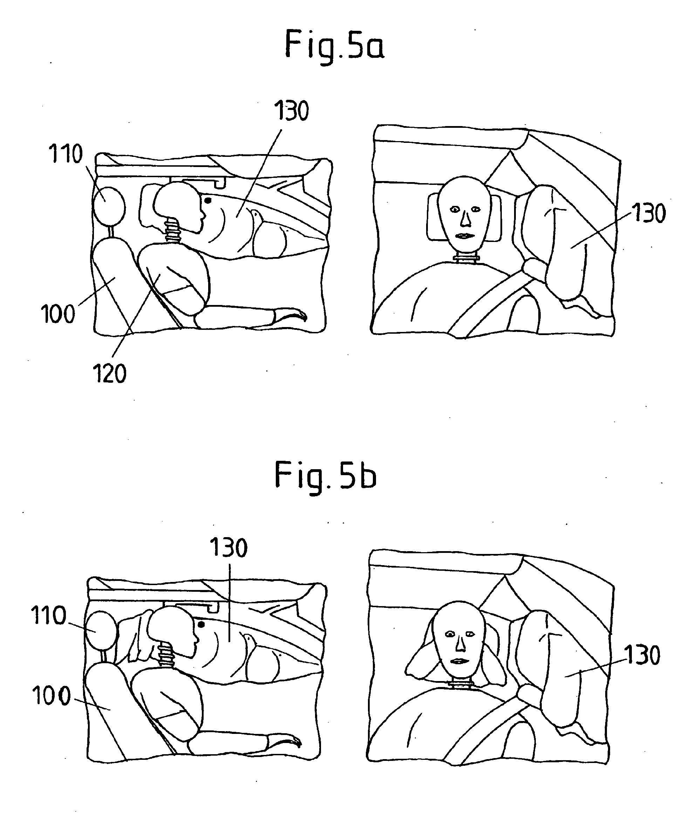

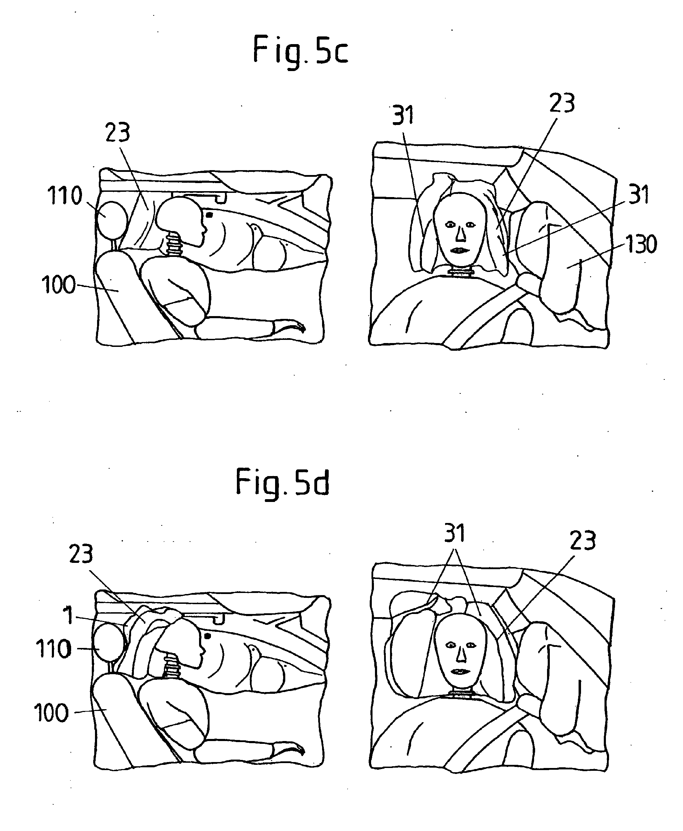

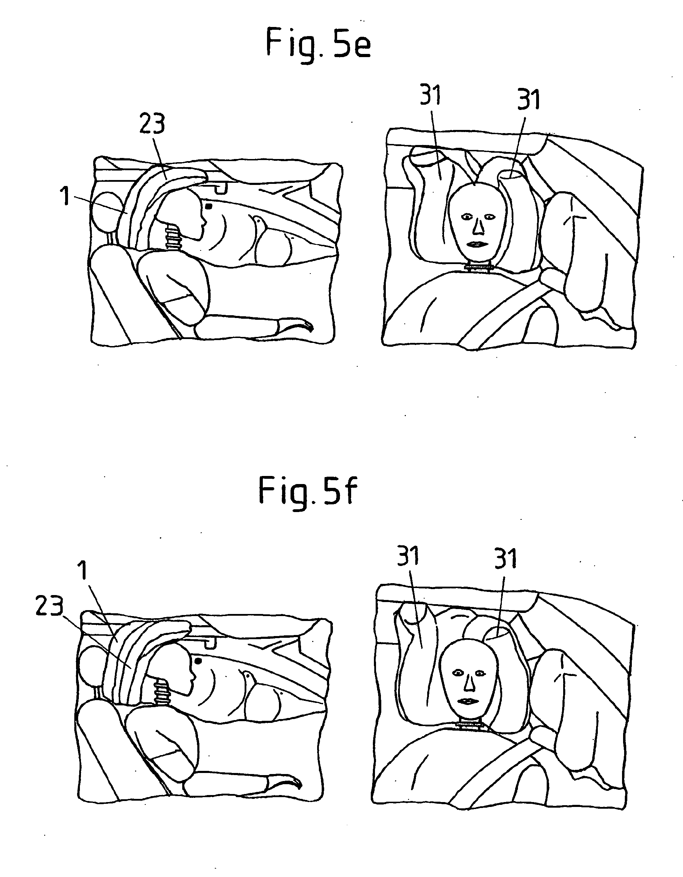

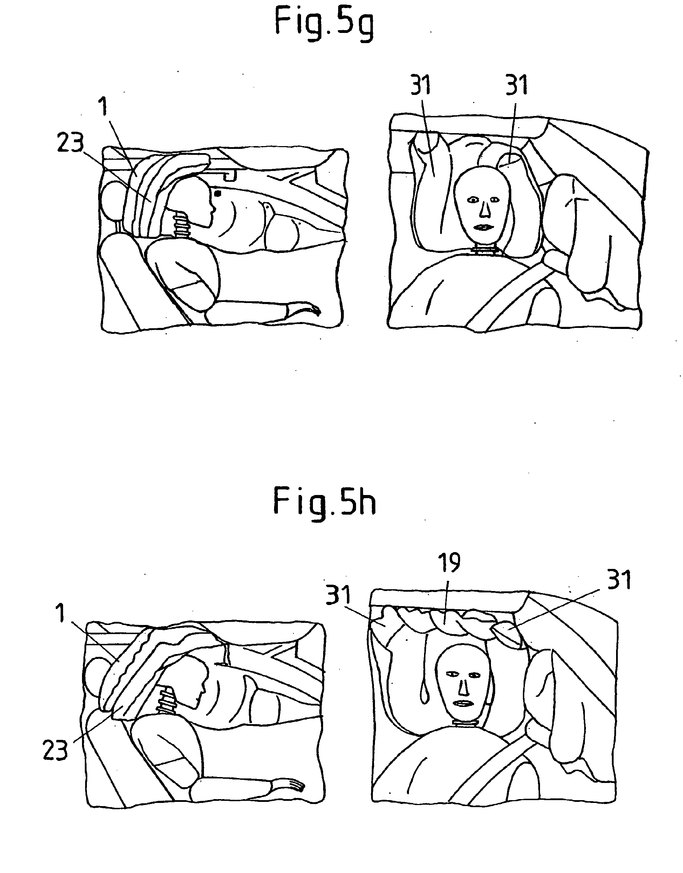

Die Figuren 4a und 4b zeigen schließlich, wie die Gewebeplatten 55 des Hilfssacks 23 auf die Gewebeplatten 45 des Hauptsacks 1 aufgelegt und unter Hoch- bzw. Zusammenklappen der Randbereiche vernäht werden. Das Zusammenklappen und Vernähen ist durch den Pfeil 69 in der Figur 5 anschaulich dargestellt.

Durch die Klebestellen 51 sind die Gewebeplatten 45 des Hilfssacks 23 und die Gewebeplatten 55 des Hauptsack 1 miteinander verklebt.

Die Figuren 5a bis 5h zeigen das Aufblasen des Gassacks 41 gemäß den Figuren 1 bis 4 im zeitlichen Verlauf, und zwar in einem Zeitfenster von 0 bis 300 ms. Dabei zeigt jeweils die linke Abbildung jeder Figur eine Seitenansicht und die jeweils rechte Abbildung eine Ansicht von vorn. Die Figur 5a zeigt dabei den Zustand des Gassacks zu Beginn des Aufblasens, also kurz nach dem Auslösen der Insassenschutzeinrichtung gemäß den Figuren 1 bis 4. Die Figuren 5b bis 5h zeigen dann den weiteren zeitlichen Verlauf des Aufblasens.

Man erkennt in den Figuren 5a bis 5h einen Fahrersitz 100 mit einer Kopfstütze 110. Auf diesem Fahrersitz 100 befindet sich eine Puppe 120, ein sogenannter Dummy, der einen Fahrzeuginsassen ersetzt.

In der Figur 5a lässt sich der Gassack 41 quasi noch gar nicht erkennen; man sieht lediglich einen Seitenairbag 130, der bereits vollständig aufgeblasen ist. Dieser Seitenairbag 130 spielt für die Erläuterung der erfindungsgemäßen Insassenschutzeinrichtung keine wesentliche Rolle und dient lediglich dazu zu zeigen, dass die erfindungsgemäße Insassenschutzeinrichtung gemäß den Figuren 1 bis 4 auch mit weiteren Schutzeinrichtungen beliebig kombinierbar ist.

In den Figuren 5b bis 5e lässt sich erkennen, wie sich der Hilfssack 23 entfaltet und aufgeblasen wird. So lässt sich insbesondere erkennen, wie sich die Positionierkissen 31 links und rechts neben dem Kopf der Puppe 120 in Richtung Fahrzeugdach erstrecken und dabei den quasi noch gasleeren Hauptsack 1 zwischen der Kopfstütze 110 und dem Kopf der Puppe 120 positionieren (vgl. insbesondere die Figur 5d). Anschließend füllt sich dann der Hauptsack 1 mit Gas, wie sich beispielsweise in der Figur 5e gut erkennen lässt.

In der Figur 5h ist der Gassack dann vollständig aufgeblasen. Man erkennt die Positionierkissen 31, zwischen denen die Rutsche 19 des Hauptsacks 1 angeordnet ist.

Den Figuren 5a bis 5 h lässt sich darüber hinaus entnehmen, dass - insbesondere bei Fahrzeuginsassen mit kleiner Körpergröße - nicht nur der obere Bereich des Hauptsackes als Rutsche wirken kann, sondern auch die unteren Bereiche von Haupt- und Hilfssack. Die unteren Bereiche von Haupt- und Hilfssack sollten daher so dimensioniert sein, dass sie in Verbindung mit der Rutsche 19 des Hauptsackes als weitere Rutsche wirken können, die sich an die eigentliche Rutsche 19 anschließt.

### Bezugszeichenliste

- 1: Hauptsack

- 3: Ovaler Saum

- 5: Kreisrunder Saum
- 7: Unterer Bereich des Hauptsacks
- 9: Oberer Bereich des Hauptsacks
- 11 u. 13: Parallele Nähte im Hauptsack
- 15: Äußere Hauptnaht
- 17: Schlauchförmiger Teilbereich
- 19: Rutsche
- 21: Verbindungslöcher
- 23: Hilfssack
- 25: Verbindungsnaht
- 27: Bereich der Verbindungslöcher
- 29: Parallele Nähte im Hilfssack
- 31: Positionierkissen
- 33: Mittelkissen
- 35: Längsnaht
- 37: Mittelschläuche
- 39: Gehäuse
- 40: Gasgenerator
- 41: Gassack
- 43: Befestigungspunkte
- 45: Gewebeplatten
- 47,49: Justagepunkte
- 47', 49':
- 51: Klebestellen
- 53: Positionierkreuze
- 55: Gewebeplatten
- 57: Äußere Naht
- 59: Kreisrunder Saum
- 61: Weiterer kreisrunder Saum
- 63: Gaseinfüllbereich
- 65, 65': Justagepunkte
- 67, 67':
- 69: Pfeil
- 100: Fahrersitz
- 110: Kopfstütze
- 120: Puppe
- 130: Seitenairbag

## Patentansprüche

1. Insassenschutzeinrichtung zum Schutz des Hals-Nackenbereiches eines Insassen (120) eines Fahrzeuges mit einem in einen Fahrzeugsitz (100) integrierten Gassack (41), der mittels eines Gasgenerators (40) aufblasbar ist und der derart ausgestaltet ist, dass er im aufgeblasenen Zustand zumindest den Kopf eines auf dem Fahrzeugsitz (100) befindlichen Insassen (120) von der Kopfstütze (110) des Fahrzeugsitzes (100) wegdrückt und damit den Hals und den Kopf des Insassen (120) in Brustrichtung beugt, wobei der Gassack (41) mindestens zwei Teilgassäcke aufweist, nämlich mindestens einen den Kopf des Insassen beugenden Hauptsack (1) und mindestens einen mit dem Hauptsack in Strömungsverbindung stehenden weiteren Teilgassack (23),
**dadurch gekennzeichnet, dass**
- der weitere Teilgassack ein mit dem Hauptsack in Strömungsverbindung stehender Hilfssack (23) ist, wobei der Hilfssack (23) und der Hauptsack (1) derart miteinander in Verbindung stehen, dass bei einem Befüllen des Gassacks mit Gas im wesentlichen zuerst der Hilfssack und erst anschließend der Hauptsack mit Gas befüllt werden,
- und wobei der Hilfssack derart ausgestaltet ist, dass er beim Befüllen mit Gas den Hauptsack entfaltet und im Hals- und Nackenbereich des Insassen positioniert, bevor der Hauptsack mit Gas befüllt wird.

2. Insassenschutzeinrichtung nach Anspruch 1,
**dadurch gekennzeichnet, dass**
- der Hilfssack (23) zwei schlauchförmige Positionierkissen (31) aufweist, die mit dem Hauptsack (1) derart verbunden sind, dass beim Aufblasen der Positionierkissen (31) die Positionierung des Hauptsacks erfolgt.

3. Insassenschutzeinrichtung nach Anspruch 2,
**dadurch gekennzeichnet, dass**
- die zwei schlauchförmigen Positionierkissen (31) derart ausgestaltet sind, dass sie sich während des Aufblasens vom Bereich des Fahrzeugsitzes (100) seitlich links bzw. rechts am Kopf des Insassen vorbei in Richtung Fahrzeugdach hinaus entfalten und den noch im wesentlichen unbefüllten Hauptsack in Richtung Fahrzeugdach ziehen - unter Positionierung des Hauptsacks (1) zwischen der Kopfstütze (110) und dem Kopf des Insassen.

4. Insassenschutzeinrichtung nach Anspruch 2 oder 3,
**dadurch gekennzeichnet, dass**
- die zwei schlauchförmigen Positionierkissen (31) durch ein Mittelkissen (33) verbunden sind, das sich beim Aufblasen im Bereich zwischen der Kopfstütze und dem Kopf des Insassen entfaltet.

5. Insassenschutzeinrichtung nach Anspruch 4,
**dadurch gekennzeichnet, dass**
- die Dicke des Mittelkissen (33) derart klein bemessen ist, dass beim Befüllen des Hilfssackes (23) mit Gas der Kopf des Insassen nur unwesentlich nach vorne in Fahrtrichtung bewegt wird.

6. Insassenschutzeinrichtung nach Anspruch 5,
**dadurch gekennzeichnet, dass**
- die Dicke des Mittelkissens (33) derart bemessen ist, dass beim Befüllen des Hilfssackes mit Gas der Kopf des Insassen maximal 15 cm in Fahrtrichtung bewegt wird.

7. Insassenschutzeinrichtung nach einem der Ansprüche 2 bis 6,
**dadurch gekennzeichnet, dass**
- die Positionierkissen (31) jeweils zwei Bereiche aufweisen, nämlich einen unteren Bereich, der zumindest im aufgeblasenen Zustand in Höhe des Hals- und Kopfbereiches des Insassen angeordnet ist und sich vom Fahrersitz in Richtung Fahrzeugdach erstreckt, und einen oberen Bereich, der zumindest im aufgeblasenen Zustand oberhalb des Kopfbereiches des Insassen angeordnet ist und gegenüber dem unteren Bereich in Fahrtrichtung nach vom abgewinkelt ist.

8. Insassenschutzeinrichtung nach Anspruch 7,
**dadurch gekennzeichnet, dass**
- die beiden Positionierkissen (31) in ihrem unteren Bereich durch das Mittelkissen (33) und in ihrem oberen Bereich durch den oberen Bereich (9) des Hauptsacks (1) verbunden sind.

9. Insassenschutzeinrichtung nach Anspruch 7 oder 8,
**dadurch gekennzeichnet, dass**
- die Länge des oberen Bereichs der Positionierkissen (31) derart dimensioniert ist, dass eine Abdeckung des Dachholmes des Fahrzeugs erfolgt.

10. Insassenschutzeinrichtung nach Anspruch 7, 8 oder 9,
**dadurch gekennzeichnet, dass**
- dass der obere Bereich (9) des Hauptsacks (1) derart als Rutsche (19) ausgebildet ist, dass der Kopf des Insassen während einer Bewegung in Richtung zum Fahrzeugdach entlang einer vorgegebenen Bahn geführt wird.

11. Insassenschutzeinrichtung nach einem der vorangehenden Ansprüche,
**dadurch gekennzeichnet, dass**
- die Strömungsverbindung zwischen dem Hauptsack (1) und dem Hilfssack (23) durch zwei Verbindungslöcher (21) gewährleistet ist.

12. Insassenschutzeinrichtung nach Anspruch 11,
**dadurch gekennzeichnet, dass**
- die zwei Verbindungslöcher (21) den Hauptsack mit den beiden Positionierkissen (31) verbinden.

13. Insassenschutzeinrichtung nach einem der Ansprüche 2 bis 12,
**dadurch gekennzeichnet, dass**
- die beiden Positionierkissen (31) - gegenüber dem Mittelkissen - in Fahrtrichtung erhaben sind.

14. Insassenschutzeinrichtung nach einem der Ansprüche 4 bis 13,
**dadurch gekennzeichnet, dass**
- der Hilfssack (23) durch zwei jeweils entlang einer Spiegelachse im wesentlichen spiegelsymmetrisch geformte Gassack-Lagen (55) gebildet ist, die an ihrem äußeren Rand miteinander verbunden sind sowie durch mindestens zwei streifenförmige, die beiden Gassack-Lagen (55) verbindende Verbindungsbereiche (29) in drei Teilbereiche untergliedert sind, von denen der mittlere Teilbereich das Mittelkissen (33) und die beiden äußeren Teilbereiche die Positionierkissen bilden, und
- das Mittelkissen und die beiden unteren Bereiche der Positionierkissen (31) im wesentlichen parallel zur Spiegelachse angeordnet sind, wohingegen die beiden oberen Bereiche der Positionierkissen unter einem vorgegebenen Winkel senkrecht zur Spiegelachse abgewinkelt sind.

15. Insassenschutzeinrichtung nach Anspruch 14,
**dadurch gekennzeichnet, dass**
- der vorgegebene Winkel ungefähr 45 Grad beträgt.

16. Insassenschutzeinrichtung nach Anspruch 14 oder 15,
**dadurch gekennzeichnet, dass**
- die zwei streifenförmigen, die beiden Gassack-Lagen verbindenden Verbindungsbereiche jeweils durch eine Verbindungsnaht bzw. einen Saum (29) gebildet sind.

17. Insassenschutzeinrichtung nach Anspruch 14, 15 oder 16,
**dadurch gekennzeichnet, dass**
- die beiden Gassack-Lagen an ihrem äußeren Rand miteinander vernäht und/oder verklebt sind.

18. Insassenschutzeinrichtung nach einem der Ansprüche 14 bis 17,
**dadurch gekennzeichnet, dass**
- die beiden Gassack-Lagen im Bereich der Spiegelachse zumindest teilweise miteinander verbunden, insbesondere vernäht und/oder verklebt, sind unter Bildung zweier schlauchförmiger Mittelschläuche (37) im Mittelkissen.

19. Insassenschutzeinrichtung nach Anspruch 18,
**dadurch gekennzeichnet, dass**
- die Mittelschläuche (37) in Richtung Fahrzeugdach in ihrem oberen Endbereich konisch zulaufen.

20. Insassenschutzeinrichtung nach Anspruch 19,
**dadurch gekennzeichnet, dass**
- der Rand der beiden Gassack-Lagen (55) im oberen Bereich des Mittelkissen (33) zumindest teilweise wellenförmig ausgestaltet ist.

21. Insassenschutzeinrichtung nach einem der vorangehenden Ansprüche,
**dadurch gekennzeichnet, dass**
- der Hauptsack durch zwei weitere Gassack-Lagen (45) gebildet ist, die an ihrem äußeren Rand miteinander verbunden sind und
- der Hauptsack (1) in einen unteren Kissenbereich (7) und einen oberen Kissenbereich (9) untergliedert ist, wobei der obere Kissenbereich durch zwei weitere streifenförmige, die beiden weiteren Gassack-Lagen verbindende Verbindungsbereiche (11, 13) in drei schlauchförmige Teilbereiche (17) untergliedert ist, die die Rutsche (19) des Hauptsacks bilden.

22. Insassenschutzeinrichtung nach Anspruch 21,
**dadurch gekennzeichnet, dass**
- die zwei weiteren streifenförmigen Verbindungsbereiche (11, 13) jeweils durch Vernähen und/oder Verkleben gebildet sind.

23. Insassenschutzeinrichtung nach Anspruch 21 oder 22,
**dadurch gekennzeichnet, dass**
- die beiden weiteren Gassack-Lagen (45) an ihrem äußeren Rand miteinander vernäht und/oder verklebt sind.

24. Insassenschutzeinrichtung nach einem der Ansprüche 21, 22 oder 23 in Rückbezug auf einen der Ansprüche 14 bis 22,
**dadurch gekennzeichnet, dass**
- die beiden unter dem vorgegebenen Winkel abstehenden innenliegenden Ränder (65-67, 65' - 67') des oberen Bereiches der Positionierkissen (31) und der seitliche obere Rand (47-49, 47'-49') des Hauptkissens (1) miteinander, insbesondere durch Vernähen und/oder Verkleben, verbunden sind.

25. Insassenschutzeinrichtung nach Anspruch 24,
**dadurch gekennzeichnet, dass**
- die zwei weiteren streifenförmigen Verbindungsbereiche im oberen Kissenbereich (9) des Hauptsacks jeweils in einen kreisförmigen Saum (5) münden und
- der Hauptsack und der Hilfssack derart zueinander angeordnet sind, dass im zumindest annähernd aufgeblasenen Zustand von Haupt- und Hilfssack die Mittelschläuche (37) des Hilfssacks zwischen dem Kopf des Insassen und den beiden Säumen angeordnet sind und diese gegenüber dem Kopf abdecken.

26. Insassenschutzeinrichtung nach Anspruch 24 oder 25,
**dadurch gekennzeichnet, dass**
- der untere Kissenbereich (7) des Hauptsacks (1) eine in sich geschlossene Abnaht (3), insbesondere einen ovalen Saum (3), aufweist, der die Dicke und die Form des Hauptsacks im Hinblick auf das gewünschte Beugen von Hals und Kopf des Insassen festlegt.

27. Insassenschutzeinrichtung nach einem der vorangehenden Ansprüche,
**dadurch gekennzeichnet, dass**
- der Gassack im deaktivierten Zustand in einem Sackbehälter der Insassen-Schutzeinrichtung aufbewahrt ist, wobei
- der Sackbehälter derart angeordnet oder derart mit einer Rampe, insbesondere einem Blechansatz, versehen ist, dass sich der Gassack beim Aufblasen in Fahrtrichtung nach vorn geneigt entfaltet.

28. Insassenschutzeinrichtung nach einem der Ansprüche 4 bis 27,
**dadurch gekennzeichnet, dass**
- das Mittelkissen (33) des Hilfssacks in seinem unteren, sich im wesentlichen im Bereich zwischen der Kopfstütze und dem oberen Ende des Fahrersitzes entfaltenden Bereich gegenüber dem übrigen Bereich des Mittelkissens verstärkt ausgeführt ist.

29. Insassenschutzeinrichtung nach einem der Ansprüche 2 bis 28,
**dadurch gekennzeichnet, dass**
- die Befestigung des Hilfssacks am Sackbehälter oder am Fahrersitz an mindestens zwei Befestigungspunkten (43) erfolgt, von denen der eine am unteren äußeren Rand eines der Positionierkissen (31) und der andere am unteren äußeren Rand des anderen Positionierkissens angeordnet ist.

30. Insassen-Schutzeinrichtung nach einem der vorangehenden Ansprüche ,
**dadurch gekennzeichnet, dass**
- der Hauptsack und der Hilfssack zumindest im Bereich ihrer Verbindungslöcher (27) miteinander verklebt sind, insbesondere mit Silikonkleber.

31. Insassenschutzeinrichtung nach einem der vorangehenden Ansprüche,
**dadurch gekennzeichnet, dass**
- die Insassenschutzeinrichtung einen im hinteren Bereich des Fahrzeugs angeordneten Aufprallsensor und eine mit diesem Aufprallsensor verbundene Steuereinrichtung aufweist und
- die Steuereinrichtung derart ausgestaltet ist, dass sie das Aufblasen des Gassacks auch bei einem Heckaufprall auslöst, sofern der Aufprallsensor einen Aufprall eines von hinten auffahrenden Fahrzeugs mit einer Differenzgeschwindigkeit ermittelt, die einen vorgegebenen Differenzgeschwindigkeitsgrenzwert überschreitet.

32. Insassenschutzeinrichtung nach einem der vorangehenden Ansprüche,
**dadurch gekennzeichnet, dass**
- verklebte Verbindungsbereiche zwischen Gassack-Lagen bzw. zwischen Haupt- und Hilfssack zumindest teilweise durch Silikon-Kleber verklebt sind.

## Claims

1. An occupant safety device for the protection of the neck-nape area of an occupant (120) of a vehicle comprising an airbag (41) integrated in a vehicle seat (100) being inflatable by means of a gas generator (40) and configured so that it pushes in the inflated state at least the head of an occupant (120) seated on the vehicle seat (100) away from the head restraint (110) of the vehicle seat (100) und therewith bends the neck and the head of the occupant (120) towards its chest, the airbag (41) having at least two partial airbags, namely at least one main bag (1) bending the head of the occupant and at least one additional partial airbag (23) in fluid connection with the main bag,
**characterized in that**
- the additional partial airbag is an auxiliary bag (23) in fluid connection with the main bag the auxiliary bag (23) and the main bag (1) being connected to each other such way that upon a filling of the airbag with gas substantially the auxiliary bag is filled with gas at first and the main bag only afterwards,
- and the auxiliary bag being configured so that it upon the filling with gas unfolds the main bag and positions it in the neck and nape area of the occupant before the main bag is filled with gas.

2. The occupant safety device according to claim 1, **characterized in that** the auxiliary bag (23) has two tubular positioning cushions (31) which are connected with the main bag (1) so that, upon inflation of the positioning cushions (31) the positioning of the main bag takes place.

3. The occupant safety device according to claim 2, **characterized in that** the two tubular positioning cushions (31) are configured so that they during inflation deploy laterally from the area of the vehicle seat (100) on the left and right of the occupant's head toward the roof of the vehicle and draw the main bag being substantially unfilled towards the roof of the vehicle - positioning the main bag (1) between the head restraint (110) and the head of the occupant.

4. The occupant safety device according to claim 2 or 3, **characterized in that** the two tubular positioning cushions (31) are connected by a middle cushion (33) which upon inflation deploys in the area between the head restraint and the occupant's head.

5. The occupant safety device according to claim 4, **characterized in that** the thickness of the middle cushion (33) is so small that, when the auxiliary bag (23) fills with gas, the occupant's head is moved only slightly forward in the direction of forward travel of the vehicle.

6. The occupant safety device according to claim 5, **characterized in that** the thickness of the middle cushion (33) is configured so that upon inflation of the auxiliary bag with gas the occupant's head is moved no more than 15 cm in the direction of forward travel of the vehicle.

7. The occupant safety device according to one of the claims 2 to 6, **characterized in that** each of the positioning cushions (31) has two portions, namely a lower portion which at least when in the inflated state is disposed at the level of the occupant's neck and head area and extends from the driver's seat toward the vehicle roof, and an upper portion, which at least in the inflated state is disposed above the occupant's head area and is angled forward in the direction of travel with respect to the lower portion.

8. The occupant safety device according to claim 7, **characterized in that** the two positioning cushions (31) are joined together in their lower portion by the middle cushion (33) and in their upper portion by the upper portion (9) of the main bag (1).

9. The occupant safety device according to claim 7 or 8, **characterized in that** the length of the upper portion of the positioning cushions (31) is dimensioned to cover the roof rail of the vehicle.

10. The occupant safety device according to claim 7, 8 or 9, **characterized in that** the upper portion (9) of the main bag (1) is configured as a chute (9) so that the occupant's head during a movement towards the vehicle roof is guided along a predetermined path.

11. The occupant safety device according to any of the preceding claims, **characterized in that** the fluid connection between the main bag (1) and the auxiliary bag (23) is provided by two connecting ports (21).

12. The occupant safety device according to claim 11, **characterized in that** the two connecting ports (21) connect the main bag to the two positioning cushions (31).

13. The occupant safety device according to one of the claims 2 to 12, **characterized in that** the two positioning cushions (31) are raised compared to the middle cushions.

14. The occupant safety device according to one of the claims 4 to 13, **characterized**
**in that**
- the auxiliary bag (23) is formed by two airbag layers (55) being substantially mirror-symmetrically shaped along a mirror-image axis which airbag layers are joined together at their outer margin and are subdivided into three portions by at least two strip-like connecting portions (29) connecting the two airbag layers (55), wherein the middle portion forms the middle cushion (33) and the two outer portions form the positioning cushions, and
- the middle cushions and the two lower portions of the positioning cushions (31) are arranged substantially parallel to the mirror-image axis, while the two upper portions of the positioning cushions are turned at a given angle perpendicular to the mirror-image axis.

15. The occupant safety device according to claim 14, **characterized in that** the given angle is approximately 45 degrees.

16. The occupant safety device according to claim 14 or 15, **characterized in that** the two strip-like connecting areas connecting the two airbag layers are each formed by a connecting seam or a hem (29) respectively.

17. The occupant safety device according to claim 14,15 or 16, **characterized in that** the two airbag layers are sewn and/or bonded together at their outer margins.

18. The occupant safety device according to one of the claims 14 to 17, **characterized in that** the two airbag layers are joined, in particular sewn and/or bonded, to one another at least partially near the mirror-image axis thereby forming two tubular middle ducts (37) in the middle cushion.

19. The occupant safety device according to claim 18, **characterized in that** the middle ducts (37) merge conically toward one another in their upper end area.

20. The occupant safety device according to claim 19, **characterized in that** the margin of the two airbag layers (55) is at least partially of wavy shape in the upper portion of the middle cushion (33).

21. The occupant safety device according to claim 1, **characterized in that**
- the main bag is formed by two airbag layers (55) which are joined together at their outer margin and
- the main bag (1) is subdivided into a lower cushion portion (7) and an upper cushion portion (9), the upper cushion portion being subdivided by two additional strip-like connecting portions (11, 13) joining together the two airbag layers into three tubular portions (17) which form the chute (19) of the main bag.

22. The occupant safety device according to claim 21, **characterized in that** the two additional strip-like connecting portions (11, 13) are formed in each case by sewing and/or bonding.

23. The occupant safety device according to claim 21 or 22, **characterized in that** the two airbag layers (55) are sewn and/or bonded together at their outer margin.

24. The occupant safety device according to one of the claims 21, 22 or 23 referencing one of the claims 14 to 22, **characterized in that** the two inside margins (65-67, 65'-67') of the upper portion of the positioning cushions (31) sticking out in the predetermined angle and the lateral upper margin (47-49, 47'-49') of the main bag (1) are joined together in particular by sewing and/or bonding.

25. The occupant safety device according to claim 24, **characterized in that**
- the two additional strip-like connecting portions in the upper cushion portion (9) of the main bag lead each into a circular hem (5) and
- the main bag and the auxiliary bag are disposed to one another so that, in the at least approximately inflated state of the main and auxiliary bag, the middle ducts (37) of the auxiliary bag are disposed between the passenger's head and the two hems and shield the hems from the head.

26. The occupant safety device according to claim 24 or 25, **characterized in that** the lower cushion portion (7) of the main bag (1) has a curved seam (3), in particular an oval hem (3), that determines the thickness and the shape of the main bag as regards the desired bending of the occupant's neck and head.

27. The occupant safety device according to one of the preceding claims,
**characterized in that**
- the airbag in the deactivated state is stored in a bag container of the occupant safety device whereas
- the bag container is arranged or provided with a ramp, in particular a sheet projection, such way that the airbag upon inflation deploys forwardly inclined in the direction of travel.

28. The occupant safety device according to one of the claims 4 to 27, **characterized in that** the middle cushion (33) of the auxiliary bag is made stronger in its lower portion substantially in the area deploying between the head restraint and the upper end of the occupant's seat, in comparison to the remaining area of the middle cushion.

29. The occupant safety device according to one of the claims 2 to 28, **characterized in that** the auxiliary bag is secured to the bag container or the vehicle seat at two fastening points (43), wherein one fastening point is located at the bottom outer margin of one of the positioning cushions (31) and the other is located at the bottom outer margin of the other positioning cushion.

30. The occupant safety device according to one of the preceding claims, **characterized in that** the main bag and the auxiliary bag are at least in the area of their connecting ports connected together by adhesive, in particular by a silicone adhesive.

31. The occupant safety device according to one of the preceding claims, **characterized in that**
- the occupant safety device has a collision sensor arranged in the back part of the vehicle and a control device connected to this collision sensor and
- the control device is configured such way that it also causes the inflation of the airbag in the event of a collision at the rear-end if the collision sensor determines a collision of a vehicle to the rear-end having a differential velocity that exceeds a predetermined differential velocity.

32. The occupant safety device according to one of the preceding claims, **characterized in that** bonded connecting portions between airbag layers and between the main and auxiliary bags respectively are bonded at least partially by silicone adhesives.

## Revendications

1. Système de protection d'occupant pour la protection de la région du cou et de la nuque d'un occupant (120) d'un véhicule, comprenant un sac à gaz (41), intégré dans un siège du véhicule (100), capable d'être gonflé au moyen d'un générateur de gaz (40) et realisé de telle façon que, dans l'état gonflé, il repousse au moins la tête d'un occupant (120) qui se trouve sur le siège du véhicule (100) en éloignement de l'appui-tête (110) du siège du véhicule (100) et incline ainsi le cou et la tête de l'occupant (120) en direction du torse, ledit sac à gaz (41) comprenant au moins deux sacs partiels, à savoir au moins un sac principal (1) qui incline la tête de l'occupant, et au moins un autre sac partiel (23) qui est en liaison avec le sac principal en termes d'écoulement,
**caractérisé en ce que**
- l'autre sac partiel est un sac auxiliaire (23) qui est en liaison avec le sac principal en termes d'écoulement, ledit sac auxiliaire (23) et ledit sac principal (1) communiquant l'un avec l'autre de telle façon que lors d'un remplissage du sac à gaz avec du gaz, le sac auxiliaire est rempli essentiellement en premier lieu, et le sac principal est rempli de gaz uniquement à la suite,
- et le sac auxiliaire est conçu de telle façon que lors du remplissage avec du gaz, il déplie le sac principal et le positionne dans la région du cou et de la nuque de l'occupant avant que le sac principal soit rempli de gaz.

2. Système de protection d'occupant selon la revendication 1,
**caractérisé en ce que**
- le sac auxiliaire (23) comprend deux coussins de positionnement (31) en forme de tuyau, qui sont reliés au sac principal (1) de telle manière que le positionnement du sac principal a lieu par gonflage des coussins de positionnement (31).

3. Système de protection d'occupant selon la revendication 2,
**caractérisé en ce que**
- les deux coussins de positionnement (31) en forme de tuyau sont réalisés de telle façon que, pendant le gonflage, ils se déploient latéralement en direction de la toiture du véhicule en passant à gauche et à droite de la tête de l'occupant et tirent le sac principal qui est encore sensiblement non rempli en direction de la toiture du véhicule, en positionnant le sac principal (1) entre l'appui-tête (110) et la tête de l'occupant.

4. Système de protection d'occupant selon la revendication 2 ou 3,
**caractérisé en ce que**
- les deux coussins de positionnement (31) en forme de tuyau sont reliés par un coussin médian (33) qui se déploie lors du gonflage dans la zone entre l'appui-tête et la tête de l'occupant.

5. Système de protection d'occupant selon la revendication 4,
**caractérisé en ce que**
- l'épaisseur du coussin médian (33) est choisie aussi petite que, lors du remplissage du sac auxiliaire (23) avec du gaz, la tête de l'occupant n'est déplacée que de manière insensible vers l'avant en direction de circulation.

6. Système de protection d'occupant selon la revendication 5,
**caractérisé en ce que**
- l'épaisseur du coussin médian (33) est choisie de telle manière que, lors du remplissage du sac auxiliaire avec du gaz, la tête de l'occupant est déplacée au maximum de 15 cm en direction de circulation.

7. Système de protection d'occupant selon l'une des revendications 2 à 6,
**caractérisé en ce que**
- les coussins de positionnement (31) présentent chacun deux zones, à savoir une zone inférieure qui, au moins à l'état gonflé, est agencée à la hauteur de la région du cou et de la tête de l'occupant et s'étend depuis le siège du conducteur en direction de la toiture du véhicule, et une zone supérieure qui, au moins à l'état gonflé, est agencée au-dessus de la région de la tête de l'occupant et forme par rapport à la zone inférieure un coude dirigé vers l'avant en direction de circulation.

8. Système de protection d'occupant selon la revendication 7,
**caractérisé en ce que**
- les deux coussins de positionnement (31) sont reliés dans leurs zones inférieures par le coussin médian (33), et sont reliés dans leurs zones supérieures par la zone supérieure (9) du sac principal (1).

9. Système de protection d'occupant selon la revendication 7 ou 8,
**caractérisé en ce que**
- la longueur de la zone supérieure des coussins de positionnement (31) est dimensionnée de telle façon qu'il se produit un recouvrement du longeron de toiture du véhicule.

10. Système de protection d'occupant selon la revendication 7, 8 ou 9,
**caractérisé en ce que**
- la zone supérieure (9) du sac principal (1) est réalisée à la manière d'un toboggan (19) de telle sorte que la tête de l'occupant est guidée le long d'une trajectoire prédéterminée pendant un mouvement en direction de la toiture du véhicule.

11. Système de protection d'occupant selon l'une des revendications précédentes,
**caractérisé en ce que**
- la liaison en termes d'écoulement entre le sac principal (1) et le sac auxiliaire (23) est assurée par deux trous de liaison (21).

12. Système de protection d'occupant selon la revendication 11,
**caractérisé en ce que**
- les deux trous de liaison (21) relient le sac principal aux deux coussins de positionnement (31).

13. Système de protection d'occupant selon l'une des revendications 2 à 12,
**caractérisé en ce que**
- les deux coussins de positionnement (31) sont surélevés, par rapport au coussin médian, en direction de circulation.

14. Système de protection d'occupant selon l'une des revendications 4 à 13,
**caractérisé en ce que**
- le sac auxiliaire (23) est formé par deux couches de sac à gaz (55) formées essentiellement de manière symétrique respectivement le long d'un axe de symétrie, qui sont reliées l'une à l'autre à leur bordure extérieure et sont subdivisées par au moins deux zones de liaison (29) en forme de rubans, qui relient les deux couches de sac à gaz (55), en trois zones partielles, parmi lesquelles la zone partielle médiane forme le coussin médian (33) et les deux zones partielles extérieures forment les coussins de positionnement, et
- le coussin médian et les deux zones inférieures des coussins de positionnement (31) sont agencés sensiblement parallèlement à l'axe de symétrie, alors que les deux zones supérieures des coussins de positionnement sont disposées sous un angle prédéterminé perpendiculairement à l'axe de symétrie.

15. Système de protection d'occupant selon la revendication 14,
**caractérisé en ce que**
- l'angle prédéterminé s'élève à environ 45°.

16. Système de protection d'occupant selon la revendication 14 ou 15,
**caractérisé en ce que**
- les deux zones de liaison en forme de rubans qui relient les deux couches de sac à gaz sont respectivement formées par une couture de liaison ou un ourlet (29).

17. Système de protection d'occupant selon la revendication 14, 15 ou 16,
**caractérisé en ce que**
- les deux couches de sac à gaz sont cousues et/ou collées l'une à l'autre au niveau de leur bordure extérieure.

18. Système de protection d'occupant selon l'une des revendications 14 à 17,
**caractérisé en ce que**
- les deux couches de sac à gaz sont reliées au moins partiellement l'une à l'autre dans la zone de l'axe de symétrie, en particulier cousues et/ou collées, en formant deux tuyaux médians (37) en forme de tubes dans le coussin médian.

19. Système de protection d'occupant selon la revendication 18,
**caractérisé en ce que**
- les tuyaux médians (37) convergent de manière conique en direction de la toiture du véhicule dans leur zone terminale supérieure.

20. Système de protection d'occupant selon la revendication 19,
**caractérisé en ce que**
- la bordure des deux couches de sac à gaz (55) est réalisée au moins partiellement sous forme ondulée dans la zone supérieure du coussin médian (33).

21. Système de protection d'occupant selon l'une des revendications précédentes,
**caractérisé en ce que**
- le sac principal est formé par deux autres couches de sac à gaz (45) qui sont reliées l'une à l'autre à leur bordure extérieure, et
- le sac principal (1) est subdivisé en une zone de coussin inférieure (7) et en une zone de coussin supérieure (9), la zone de coussin supérieure étant subdivisée, par deux autres zones de liaison (11, 13) en forme de rubans, qui relient les deux autres couches de sac à gaz, en trois zones partielles (17) en forme de tuyaux qui forment le toboggan (19) du sac principal.

22. Système de protection d'occupant selon la revendication 21,
**caractérisé en ce que**
- les deux autres zones de liaison (11, 13) en forme de rubans sont formées chacune par couture et/ou collage.

23. Système de protection d'occupant selon la revendication 21 ou 22,
**caractérisé en ce que**
- les deux autres couches de sac à gaz (45) sont cousues et/ou collées l'une à l'autre à leur bordure extérieure.

24. Système de protection d'occupant selon l'une des revendications 21, 22 ou 23, prise en dépendance de l'une des revendications 14 à 22,
**caractérisé en ce que**
- les deux bordures (65-67, 65'-67'), disposées à l'intérieur et dressées sous l'angle prédéterminé, de la zone supérieure des coussins de positionnement (31) et la bordure supérieure latérale (47-49, 47'-49') du coussin principal (1) sont reliées les unes aux autres, en particulier par couture et/ou par collage.

25. Système de protection d'occupant selon la revendication 24,
**caractérisé en ce que**
- les deux autres zones de liaison en forme de rubans débouchent dans la zone de coussin supérieure (9) du sac principal, respectivement dans un ourlet (5) de forme circulaire, et
- le sac principal et le sac auxiliaire sont agencés l'un par rapport à l'autre de telle façon que, dans l'état au moins approximativement gonflé du sac principal et du sac auxiliaire, les tuyaux médians (37) du sac auxiliaire sont agencés entre la tête de l'occupant et les deux ourlets, et recouvrent ceux-ci par rapport à la tête.

26. Système de protection d'occupant selon la revendication 24 ou 25,
**caractérisé en ce que**
- la zone de coussin inférieure (7) du sac principal (1) présente une couture (3) fermée sur elle-même, en particulier un ourlet ovale (3), qui détermine l'épaisseur et la forme du sac principal en vue d'obtenir l'inclinaison souhaitée du cou et de la tête de l'occupant.

27. Système de protection d'occupant selon l'une des revendications précédentes,
**caractérisé en ce que**
- à l'état non activé, le sac à gaz est rangé dans un récipient à sac du système de protection d'occupant, et
- le récipient à sac est agencé de telle manière, ou doté d'une rampe, en particulier d'un appendice en tôle, de telle manière que le sac à gaz se déploie de façon inclinée vers l'avant en direction de circulation lors du gonflage.

28. Système de protection d'occupant selon l'une des revendications 4 à 27,
**caractérisé en ce que**
- le coussin médian (33) du sac auxiliaire est réalisé, dans sa zone inférieure qui se déploie essentiellement dans la région entre l'appui-tête et l'extrémité supérieure du siège du conducteur, de façon renforcée par rapport à la zone restante du coussin médian.

29. Système de protection d'occupant selon l'une des revendications 2 à 28,
**caractérisé en ce que**
- la fixation du sac auxiliaire sur le récipient à sac ou sur le siège du conducteur a lieu en au moins deux points de fixation (43) dont l'un est agencé au niveau de la bordure extérieure inférieure de l'un des coussins de positionnement (31), et dont l'autre est agencé au niveau de la bordure extérieure inférieure de l'autre coussin de positionnement.

30. Système de protection d'occupant selon l'une des revendications précédentes,
**caractérisé en ce que**
- le sac principal et le sac auxiliaire sont collés l'un à l'autre, en particulier avec une colle aux silicones, au moins dans la zone de leurs trous de liaison (27).

31. Système de protection d'occupant selon l'une des revendications précédentes,
**caractérisé en ce que**
- le système de protection d'occupant comprend un capteur de collision agencé dans la zone postérieure du véhicule et un dispositif de commande reliée à ce capteur de collision, et
- le dispositif de commande est realisé de telle manière qu'il déclenche gonflage du sac à gaz également lors d'une collision par l'arrière, lorsque le capteur de collision détecte un choc d'un véhicule arrivant de l'arrière, avec une vitesse différentielle qui dépasse une valeur limite de vitesse différentielle prédéterminée.

32. Système de protection d'occupant selon l'une des revendications précédentes,
**caractérisé en ce que**
- les zones de liaison collées entre les couches de sac à gaz ou respectivement entre le sac principal et le sac auxiliaire sont collées au moins partiellement par une colle aux silicones.
